# EUROPEAN PATENT APPLICATION

(11) **EP 3 696 050 A1**
(43) Date of publication of application: **19.08.2020**
(21) Application number: 19157717.0
(22) Date of filing: 18.02.2019
(51) Int. Cl.: B62B 5/00, B62B 3/00, B62B 3/02

(54) **TROLLEY**

(71) Applicant: Qingdao Qingtai Metal Products Co., Ltd., Qingdao (CN)
(72) Inventor: SONG, Zhiyong, Qingdao (CN)
(74) Representative: Weickmann & Weickmann PartmbB

(57) **Abstract**

Trolley 10, comprising a frame 12, a loading area formed at the frame 12, at least one ground contacting element 16 to allow movement of the trolley 10 with respect to the ground, a handle 18 mounted to the frame 18, a roof 20 adapted to be removable mounted to the frame such as to cover the loading area, and at least one roof mounting member for mounting the roof 20 to the frame 12.

## Description

The present invention relates to a trolley comprising a frame, a loading area formed at the frame, at least one ground contacting element such as a wheel to allow movement of the trolley with respect to the ground and a handle mounted to the frame which may comprise a grip to pull or push the trolley and move it over the ground.

Trolleys of this type are well known in the art for transporting goods or even sometimes children or animals. Usually, trolleys are drawn by a person walking in front of the trolley. In other cases, trolleys may be pushed or connected to another vehicle, for example bicycles or cars, which then pull or push the trolley.

Some of the conventional trolleys have a roof which is adapted to be removably mounted to the frame of the trolley so as to cover the loading area and protect it against rain, for example. It is usually relatively cumbersome to mount or demount the roof, for example by means of rods that are connected to the frame or the trolley. Another disadvantage of conventional trolley roofs is that the mounting structure is not stable enough to withstand stronger wind which can occur, for example, at the beach when the trolley is used as a beach wagon. In some cases, the rods carrying the roof break when the trolley hits ground irregularities or bumps. Furthermore, the height of the roof above the load area may be too high in some use situations such that the trolley is prone to falling over during stronger winds, and on the other hand may be too low in other situations, for example when large objects are to be carried.

It is therefore an object of the present invention to provide a trolley which avoids any of the aforementioned disadvantages and features a roof as well as a roof mounting structure which are more stable, more convenient to use and better adapted to different situations of practical use.

According to the present invention, the above object is solved by a trolley comprising a frame, a loading area formed at the frame, at least one ground contacting element to allow movement of the trolley with respect to the ground, a handle mounted to the frame, a roof adapted to be removable mounted to the frame such as to cover the loading area, and at least one roof mounting member for mounting the roof to the frame, the roof mounting member having a first end adapted to be mounted to the frame and a second end adapted to be mounted to the roof, wherein the roof mounting member comprises a tube portion slidably mounted with respect to the frame.

According to an important feature of the present invention, the at least one roof mounting member for mounting the roof to the frame comprises one or more tube portions which are slidably mounted with respect to the frame. By using a tube portion, a stable connection is provided between the frame and the roof. The tubular shape of the tube portion ensures inherent structural rigidity of this member which increases stability of the roof and its support structure. Furthermore, the tube portion is slidably mounted with respect to the frame which allows an easy transformation of the trolley between different configurations. For example, by sliding the tube portion, the height of the roof could be adjusted. In another example, the tube portion could be lowered into a stowed position at the frame when the roof is removed such as to allow the tube portion to remain associated to the frame even if the roof is removed.

Preferably, the tube portion is formed of metal such as to significantly increase the stability and rigidity of the roof mounting member. Metal allows the roof as well as the roof mounting member to assume sufficient stability in order to withstand stronger wind which is particularly advantageous if the trolley is used as a beach wagon. When aluminum is used as the metal of the tube portion, sufficient stability is achieved while reducing the weight of the trolley. It has further been found that tube portions made from a metal and in particular aluminum can avoid breaking of the roof mounting members if the trolley is moved across an uneven ground or bumps. The vibrations induced within the trolley upon such movement are well accommodated within the metal due to the elasticity of the metal and therefore do not lead to a breakage of the tube portion.

In a preferred embodiment, the trolley further comprises a locking member adapted to assume a locking position for locking a movement of the tube portion relative to the frame, and a released position for allowing a movement of the tube portion relative to the frame. A user can therefore adjust the position of the tube portion by simply operating the locking member, whereas a certain position of the tube portion may be securely maintained if desired.

Preferably, the locking member is adapted to lock the tube portion relative to the frame in two or more different telescopic positions such as to allow the roof to be supported at two or more different heights above the loading area. The user can therefore adjust the height of the roof according to different use situations and depending on the size of the objects to be transported.

In a further preferred embodiment the locking member comprises a latching element provided at one of the tube portion and the frame, wherein the latching element is adapted to engage a recess in the other of the tube portion and the frame when assuming the locking position. By means of such a latching element, a positive fit or form fit can be established between the tube portion and the frame in order to securely lock their relative positions. The locking state can then be released in an easy and reliable manner by removing the latch element from the recess.

The tube portion may be locked directly at the frame. Alternatively, the roof mounting member may be a telescopic unit comprising the tube portion and a base portion slidably holding the tube portion, wherein the base portion is adapted to be mounted to the frame and the tube portion is adapted to be mounted to the roof. Such telescopic unit can be provided as a pre-mounted unit which allows reducing manufacturing costs of the trolley or retrofitting existing trolleys.

Preferably, a plurality of roof mounting members is provided to connect edge or corner portions of the roof to respective edge or corner portions of the loading area of the frame. For example, if the trolley has a rectangular loading area formed by a substantially rectangular frame, the roof may be supported by four roof mounting members mounted at the respective four corners of the rectangular loading area, respectively. Providing roof mounting members at edge or corner portions allows a central part of the loading area to be kept free of any roof mounting members which increases the loading capacity and usability of the trolley.

The roof itself may comprise a cover member made of a flexible sheet material, for example a waterproof or water-repellent textile material. In addition the roof may comprise a rod assembly adapted to assume a use configuration for supporting, preferably stretching, the cover member in an unfolded condition and a storage configuration in which the rod assembly is collapsed. Such roof can easily be collapsed and expanded in order to allow storage or transport of the roof in the storage configuration, when the trolley is to be used without a roof.

In a further preferred embodiment, the loading area has a polygonal shape (for example a rectangular shape), and the rod assembly - in the use configuration - comprises a plurality of rods corresponding to and in parallel with the sides of the polygon (for example four rods describing a rectangle that corresponds to the rectangular loading area).

In a further preferred embodiment, the trolley may comprise a pocket to stow therein the roof in a folded configuration, which allows easy transporting of the roof together with the trolley if the trolley is to be used without a roof.

Furthermore, the trolley may comprise a skirt portion extending along the circumference of the roof in a general vertical direction downwards. Such a skirt portion provides additional protection against wind or sunlight from an inclined direction. In such a configuration, the skirt portion may be provided with a flap, wherein the flap is adapted to assume an open position and a closed position, wherein the flap comprises fastening means for securing the flap in its closed position and wherein the flap is adapted to cover a portion of the handle in its closed position. Therefore, the handle may be partially covered by the flap of the skirt portion and the flap may be opened to allow operation of the handle and a pivoting movement of the handle towards and away from the roof. The fastening means may comprise a hook and loop fastener. Alternatively or in addition, other fastening means such as push buttons could be used.

In a preferred embodiment the handle is a drawbar. The handle may be pivotally mounted to the frame so as to pivot about a substantially horizontal axis between an upright position in which the handle runs in a substantially vertical direction and a forward position in which the handle runs in a forward direction or in an inclined forward and upward direction. Such a pivotally mounted handle has the advantage that it can assume different angular positions with respect to the trolley such as to adapt to different operational situations. In particular, in the upright position the handle can be used to push the trolley or to maneuver the trolley within a limited space. In general, it is to be noted at this point that a handle in the sense of the present disclosure is a member adapted to be manipulated by a user or connected to another vehicle in order to move the trolley, be it by pushing or by pulling. Furthermore, the trolley may comprise handle locking means adapted to lock the pivoting movement of the handle about the substantially horizontal axis at least in the upright position. The handle is therefore secured against unintended pivoting movements, in particular if a force is applied to the handle in order to move the trolley.

The present invention will now be explained by means of a preferred embodiment of the invention with reference to the enclosed drawings. In the drawings:
- Fig. 1: is a perspective view of a trolley according to a first embodiment of the present invention in a configuration with a lowered roof,
- Fig. 2: is a perspective view of the trolley of the first embodiment in a configuration with a raised roof,
- Fig. 3: is a perspective view of the trolley of the first embodiment in a configuration with the roof being removed,
- Fig. 4: is a perspective view of the trolley of the first embodiment in a configuration in which the frame is collapsed,
- Fig. 5: shows a rod assembly of the trolley of the first embodiment in a storage configuration,
- Fig. 6: shows the roof of the trolley of the first embodiment in a preassembled state,
- Fig. 7: shows the roof of the trolley of the first embodiment in an assembled state,
- Fig. 8: shows a perspective view of a roof mounting member of the trolley of the first embodiment,
- Fig. 9: shows a perspective view of the trolley of the first embodiment in a stage during mounting the roof,
- Fig. 10: shows a perspective view of the roof of the trolley of the first embodiment in a use configuration,
- Fig. 11: corresponds to Fig. 10, wherein a flap of the roof is opened,
- Fig. 12: is a plan view of a roof mounting member of a trolley according to a second embodiment of the present invention and
- Fig. 13: is a plan view of a handle of a trolley according to a third embodiment of the present invention.

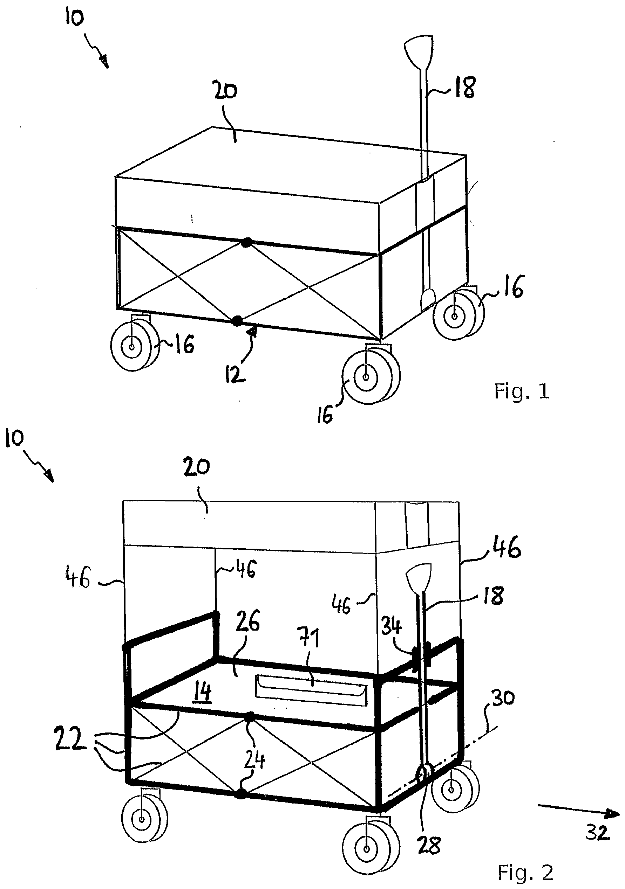

A trolley 10 according to a first embodiment of the present invention will be described in detail below with reference to Figs. 1 to 11. Trolley 10 comprises with reference to Figs. 1 and 2 a frame 12 defining a loading area 14, at least one ground contacting element 16, implemented by four wheels in the present embodiment, allowing movement of the trolley with respect to the ground, a handle 18 mounted to frame 12 and a roof 20 adapted to be removably mounted to the frame 12 such as to cover the loading area 14.

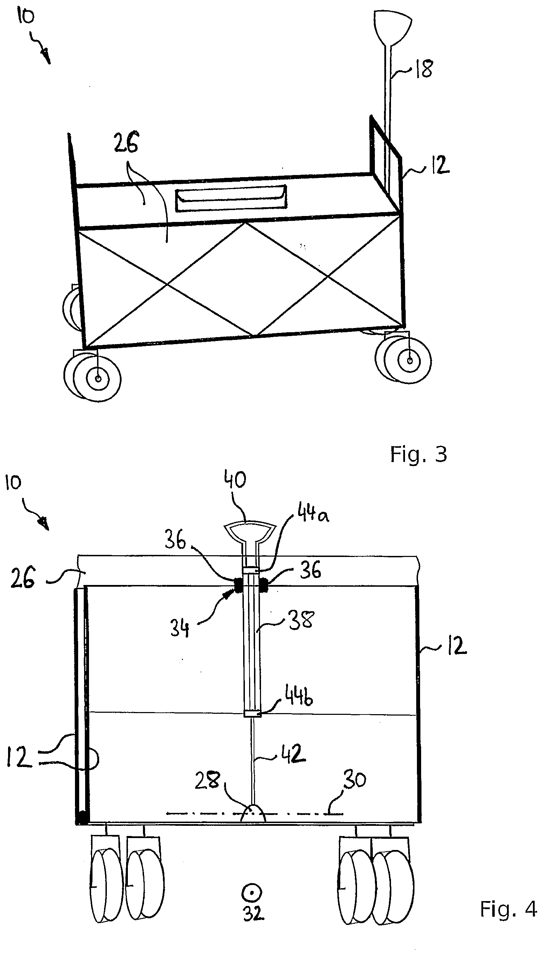

Frame 12 may be formed by a plurality of elongated frame members 22 suitably connected to one another or integrally formed with one another such as to encircle the load area 14 in a substantially rectangular shape. In the present embodiment, hinge portions 24 are provided to allow a transition of the frame 12 between an extended configuration shown in Figs. 1 to 3 and 9, and a folded or collapsed configuration shown in Fig. 4 in which the load area is either reduced or not existent anymore, and which allows storing of the trolley in a space-saving manner.

The inner portion of the frame 12 defining the load area 14 may carry a lining 26 made from a flexible material, such as a textile material, which has the general shape of a bag or pocket to enclose the load area and receive any objects to be transported with the trolley. It is to be noted that the frame 12 can have any other configuration as long as it is suitable to define a load area 14 for objects to be carried. For example, the frame 12 could also be realized by an integral tray or bowl or by a plate.

As further shown in Fig. 2, a handle 18 is pivotally mounted to frame 12 by means of a handle hinge 28 provided at a front portion of the trolley such that the handle 18 can pivot about a handle pivot axis 30 which runs parallel to the ground and orthogonally to a main driving direction 32 of the trolley 10. Handle 18 is therefore rotatable between an upright position shown in Figs. 1 to 3 in which the handle 18 is extending substantially vertically to the ground, and a forward position (not shown in the drawings) in which handle 18 is directed in forward direction, i.e. along the main driving direction 32, or in a direction inclined to the forward direction and the vertical direction.

As shown especially in Figs. 2, 4 and 11, handle locking means 34 may be provided at the frame 12 in order to lock the pivoting movement of the handle 18 about handle pivot axis 30 at least in the upright position. Handle locking means 34 may comprise at least one clip or hook 36 adapted to catch handle 18 and to temporarily hold the handle 18 in the upright position.

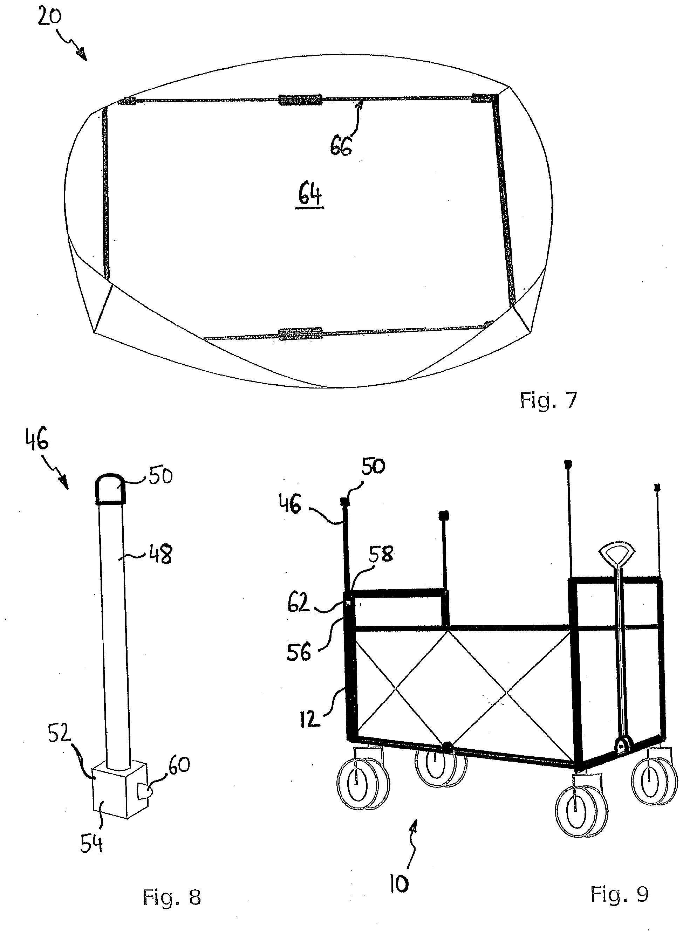

Furthermore, as can be seen in Figs. 3, 4, 9 and 11, handle 18 in this embodiment may have a telescopic configuration such as to adjust its length, in particular between a configuration with reduced length, as shown in Figs. 4 and 9, and a configuration with extended length as shown in Fig. 3, for example. The telescopic arrangement may be formed by any suitable means, for example, as shown in the figures, by a handle design which comprises two pieces, a grip member 38 having a grip 40 for manually gripping the handle 18 to pull or push trolley 10, and a base member 42 having the handle hinge 28 at its bottom end and thus being hinged to frame 12. Grip member 38 and base member 42 are connected to one another by means of at least one slide bearing 44 such as to be movable relative to one another in an axial direction of handle 18. In particular, an upper slide bearing 44a and a lower slide bearing 44b may be provided, wherein the upper side bearing 44a is fixed to the base member 42 and slidably engages grip member 38, while the lower slide bearing 44b is fixed to grip member 38 and slidably engages base member 42. An alternative example for a telescopic handle arrangement according to a third embodiment of the present invention will be described later.

In order to mount roof 20 to the frame 12, the trolley 10 of the first embodiment comprises a plurality of roof mounting members 46, for example four roof mounting members 46, which are located at edge or corner portions of the load area 14 of the frame 12. Only one of the roof mounting members 46 will be described in more detail in the following. The remaining roof mounting members 46 may be configured in the same manner.

As shown in Fig. 8, roof mounting member 46 of the first embodiment may comprise a tube portion 48 having an upper end 50 adapted to support a corner portion of roof 12 and a lower end 52 carrying a slide portion 54 adapted to be inserted into and slide within a tube-receiving portion 56 of frame 12. Tube-receiving portion 56 may be a tubular member integrally provided with the frame 12 at the edge or corner portion of the frame 12 which has an upper opening to receive therein roof mounting member 46. Preferably, the slide portion 54 has an outer shape adapted to the inner shape of tube-receiving portion 56 in order to ensure smooth sliding of the roof mounting member 46 into and out of frame 12.

To lock the sliding movement of roof mounting member 46 in certain positions, tube-receiving portion 56 may have at least one recess in its wall in order to receive a latching element 60 of roof mounting member 46. Latching element 60 may be a pin which is carried by slide portion 54 and which is movable between a protruding position as shown in Fig. 8 and a retracted position (not shown) in which latching element 60 is retracted into slide portion 54. A spring (not shown) may bias latching element 60 into the protruding position. Thus, when latching element 60 engages recess 62, a sliding movement between roof mounting member 46 and tube-receiving portion 56 is blocked and roof mounting member 46 is thus locked in an extended configuration. Upon pushing latch member 60, for example by a finger of the user, latch element 60 is retracted and roof mounting member 46 is allowed to slide within the tube-receiving portion 56, for example into a position as shown in Fig. 3 in which the roof mounting member 46 is completely retracted within tube-receiving portion 54. Such a configuration is convenient if the trolley 10 is to be used without a roof.

Tube portion 48 is preferably made from a rigid metal, in particular from aluminum, and may be configured as a hollow tube in order to provide extra rigidity and lightweight design.

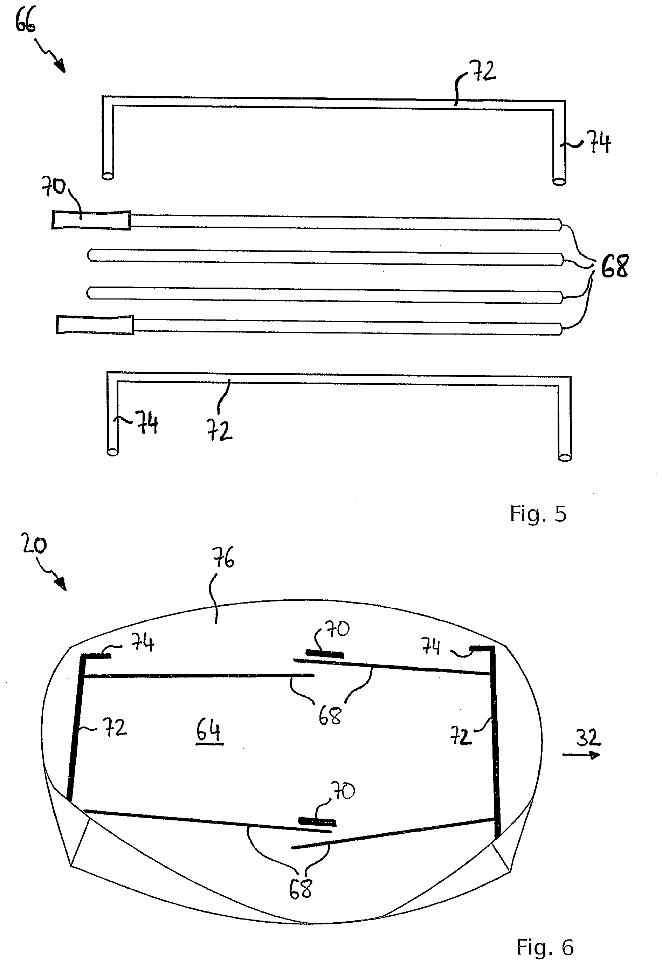

The roof 20 of the first embodiment is described in more detail in the following with respect to Figs. 5 to 7. Roof 20 basically comprises a cover member 64 and a rod assembly 66. Cover member 64 may be of a flexible sheet material such as textile or any synthetic material, preferably a material which is waterproof or water-repellent such as to act as a rain cover. Rod assembly 66 may comprise a number of rods connected to one another by connecting members, for example connecting sleeves.

In a particular example, the loading area 14 is rectangular having a long side in the main driving direction 32 and a short side orthogonal to the main driving direction 32, and rod assembly 66, in its use configuration, describes the edges and corners of the corresponding rectangle. The long sides may be formed by a plurality of first rods 68 aligned along the same axis and axially connected to one another by a connecting sleeve 70. In particular, ends of neighboring first rods 68 are inserted into opposing open ends of a connecting sleeve 70. By using two or more first rods 68 to form the long sides of the rectangle, the rod assembly 66 can be collapsed into a storage configuration which is very compact and can easily be stowed, for example at in a pocket 71 of the trolley 10, when using trolley 10 without a roof.

The short sides of the rectangle may be formed by single second rods 72, respectively. In the first embodiment, the second rods 72 are tubes which are bent at the corners of the rectangle such as to protrude towards the long sides of the rectangle and form protruding tube portions 74. The inner diameter of the protruding tube portions 74 are adapted to receive therein ends of the first rods 68.

Thus, according to a preferred operation of the first embodiment of the present invention, in order to unfold roof 20 and mount roof 20 to frame 12, the first rods 68 are inserted into the connecting sleeves 70 at their one end and into the protruding tubes 74 at their other ends such as to form a rectangular use configuration of the rod assembly 66. The rod assembly 66 is then inserted into cover member 64. Alternatively, rod assembly 66 may be inserted into cover member 64 before assembly, i.e. when the first rods 68 and the second rods 72 are detached from one another, and afterwards the rod assembly 66 is assembled into the rectangular use configuration while being inside the cover member 64 already.

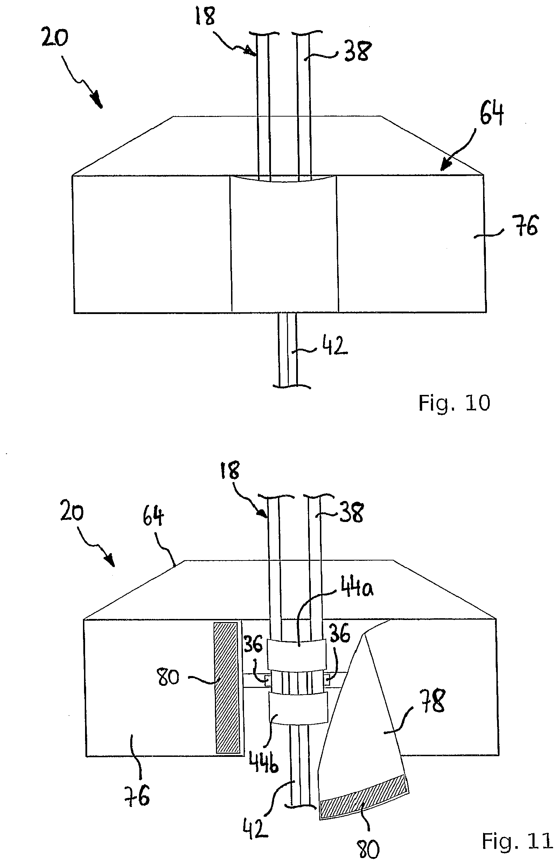

Roof 20, in its use configuration, is then mounted to the upper ends 50 of the roof mounting members 46 and is held in place by the tension of the roof with respect to roof mounting members 46 as well as by gravity. However, additional securing means such as ribbons or clips (not shown) may be used to additionally secure roof 20 to roof mounting members 46 or to frame 12. Figs. 10 and 11 illustrate an additional feature of the first embodiment of the present invention which provides advantages in a condition where the roof 20 is mounted to the frame 12 by means of the roof mounting members 46. In particular, cover member 64 of roof 20 comprises a skirt portion 76 which extends along the circumference of the roof 20 and extends in a generally vertical direction downwards. Preferably, the skirt portion 76 is integrally formed with the remaining part of the cover member 64 and thus the cover member 64 assumes a general shape of a hood or cap opening downwards.

At a front portion of skirt portion 76, a flap 78 may be provided, wherein the flap 78 can assume an open position as shown in Fig. 11 and a closed position as shown in Fig. 10. Fastening means 80, for example a hook-and-loop fastener, are preferably used to secure flap 78 in its closed position. By means of flap 78 the skirt portion 76 is interrupted or opened at a front portion, specifically at a portion at which handle 18 approaches the roof 20 when in its upright position. Flap 78 may cover portions of handle 18 and other members of trolley 10 when in the closed position. For example, in the configuration shown in Figs. 10 and 11 in which handle 18 is fully extended and roof mounting members 46 are retracted such that roof 20 is lowered at a minimum level, flap 78 is adapted to cover both slide bearings 44a, 44b as well as handle locking means 34.

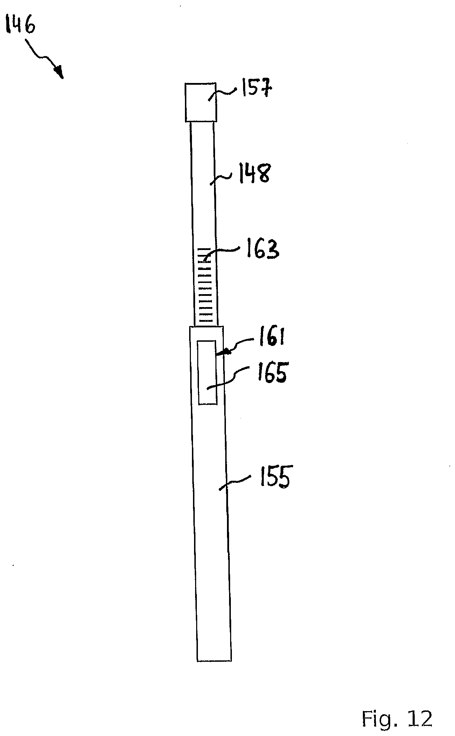

Fig. 12 shows a roof mounting member 146 of a trolley according to a second embodiment of the present invention. The second embodiment differs from the first embodiment only in the configuration of the roof mounting member and the tube-receiving portion of frame 12. Regarding all other features and effects of the trolley, reference is made to the description of the first embodiment which applies to the second embodiment in the same way.

Roof mounting member 146 according to the second embodiment is configured as a telescopic unit comprising a tube portion 148 and a base portion 155. The tube portion 148 is slidably received within base portion 155 such that a general piston-cylinder-arrangement is formed.

A latch-and-lock mechanism 161 may be provided to control the sliding movement between tube portion 148 and base portion 155 such as to assume separate indexing positions associated with indexing recesses 163. For example, a plurality of indexing recesses 163 can be axially distributed along the tube portion 148 and latch-and-lock mechanism 161 may comprise a latching body (not shown) such as a ball or a pin, which is arranged to selectively engage one of the indexing recesses 163. The latching body is preferably biased towards the tube portion 148 and into engagement with any of the indexing recesses 163 by means of a latch spring (not shown). Further, the indexing recesses 163 and the latching body are shaped in such manner as to allow the latching body to move against the force of the latch spring and out of engagement from an indexing recess 163 when a sufficient force is exerted between tube portion 148 and base portion 155 in axial direction.

A latch locking member 165 may be arranged at base portion 155 in order to manually lock or unlock the movement of the latching body. When latch locking member 165 is in a locked position, movement of the latching body is prevented and the latching body is held inside its current indexing recess 163, such that movement between tube portion 148 and base portion 155 is locked. When latch locking member 165 is in the unlocked position, movement of the latching body is permitted, though under the control of the latch spring. Preferably the latch locking member 165 is biased towards the locked position by means of a locking spring (not shown). The latch locking member 165 may then be operated manually by the user against the biasing force of the locking spring in order unlock the latching body and to therefore allow movement of the tube portion 148 relative to the base portion 155.

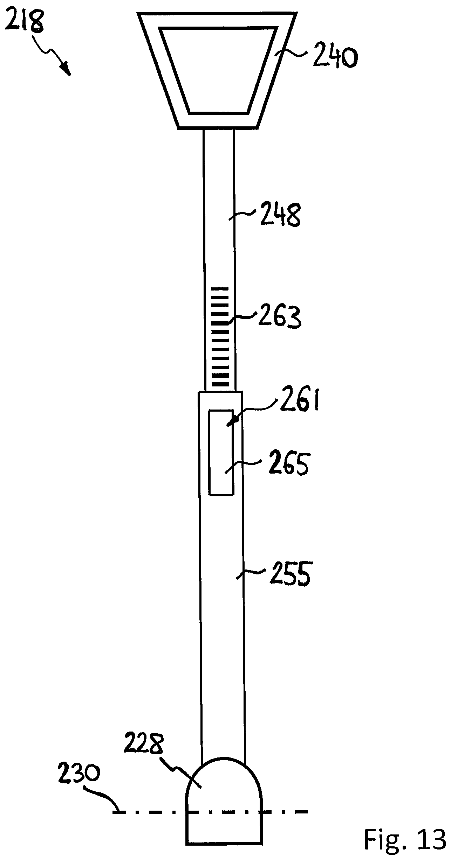

Fig. 13 shows a handle 218 of a trolley according to a third embodiment of the present invention. The third embodiment differs from the first embodiment and/or the second embodiment only in the configuration of the handle 218. Regarding all other features and effects of the trolley, reference is made to the description of the first embodiment and/or second embodiment which applies to the third embodiment in the same way.

A handle 218 of the third embodiment has a grip 240 for a user to pull, push or otherwise maneuver the trolley. Handle 218 may be pivotally mounted to the frame (not shown) by means of a handle hinge 228 such that the handle 218 can pivot about a handle pivot axis 230 which runs parallel to the ground, similar as described above with respect to the first embodiment of the present invention. Handle 218, however, differs from the handle 18 of the first embodiment in the construction of the telescopic arrangement. Namely, in the third embodiment, the construction of the telescopic arrangement of the handle 218 corresponds to that of roof mounting member 146 according to the second embodiment. This means that handle 218 comprises a tube portion 248 and a base portion 255, wherein the tube portion 248 is slidably received within base portion 255 such that a general piston-cylinder-arrangement is formed.

Furthermore a latch-and-lock mechanism 261 may be provided to control the sliding movement between tube portion 248 and base portion 255 such as to assume separate indexing positions associated with indexing recesses 263 in the same manner as described above for the second embodiment. In particular, the latch-and-lock mechanism 261 may be constructed in the same way as in the second embodiment such as to allow a latch locking member 265 to be operated manually by a user and to therefore allow movement of the tube portion 248 relative to the base portion 255.

## Claims

1. Trolley (10), comprising
- a frame (12),
- a loading area (14) formed at the frame (12),
- at least one ground contacting element (16) to allow movement of the trolley (10) with respect to the ground,
- a handle (18; 218) mounted to the frame (18),
- a roof (20) adapted to be removable mounted to the frame such as to cover the loading area (14), and
- at least one roof mounting member (46; 146) for mounting the roof (20) to the frame (12), the roof mounting member (46; 146) having a first end (52) adapted to be mounted to the frame (12) and a second end (50) adapted to be mounted to the roof (20),
wherein the roof mounting member (46; 146) comprises a tube portion (48; 148) slidably mounted with respect to the frame (12).

2. Trolley (10) according to claim 1,
wherein the at least one tube portion (48; 148) is formed of metal, preferably from aluminum.

3. Trolley (10) according to claim 1 or claim 2,
further comprising a locking member (60; 165) adapted to assume a locking position for locking a movement of the tube portion (48; 148) relative to the frame (12), and a release position for allowing a movement of the tube portion (48; 148) relative to the frame (12).

4. Trolley (10) according to claims 3,
wherein the locking member (60; 165) is adapted to lock the tube portion (48; 148) relative to the frame (12) in two or more different telescopic positions such as to allow the roof (20) to be supported at two or more different heights above the loading area (14).

5. Trolley (10) according to claim 3 or claim 4,
wherein the locking member (60) comprises a latching element provided at one of the tube portion (48) and the frame (12), wherein the latching element is adapted to engage a recess (62) in the other of the tube portion (48) and the frame (12) when assuming the locking position.

6. Trolley (10) according to claim 3 or claim 4,
wherein the at least one roof mounting member (146) is a telescopic unit comprising the tube portion (148) and a base portion (155) slidably holding the tube portion (148), wherein the base portion (155) is adapted to be mounted to the frame (12) and the tube portion (148) is adapted to be mounted to the roof (20).

7. Trolley (10) according to at least one of the previous claims,
wherein a plurality of roof mounting members (46; 146) are provided to connect edge or corner portions of the roof (20) to respective edge or corner portions of the loading area (14) of the frame (12).

8. Trolley (10) according to at least one of the previous claims,
wherein the roof (20) comprises a cover member (64) made of a flexible sheet material, and a rod assembly (66) adapted to assume a use configuration for supporting, preferably stretching, the cover member (64) in an unfolded condition and a storage configuration in which the rod assembly (66) is collapsed.

9. Trolley (10) according to claim 8,
wherein the loading area (14) has a polygonal shape and wherein the rod assembly (66), in the use configuration, comprises a plurality of rods (68, 72) corresponding to and in parallel with the sides of the polygon.

10. Trolley (10) according to claim 9,
further comprising a pocket (71) to stow therein the roof (20) in a folded configuration.

11. Trolley (10) according to at least one of the previous claims,
wherein the roof (20) comprises a skirt portion (76) extending along the circumference of the roof (20) and in a general vertical direction downwards.

12. Trolley (10) according to claim 11,
further comprising a flap (78) provided at the skirt portion (76) of the roof, wherein the flap (78) is adapted to assume an open position and a closed position, wherein the flap (78) comprises fastening means, preferably a hook-and-loop fastener (80), for securing the flap (78) in its closed position and wherein the flap (78) is adapted to cover a portion of the handle (18; 218) in its closed position.

13. Trolley (10) according to at least one of the preceding claims,
wherein the handle (18; 218) is pivotally mounted to the frame (12) such as to pivot about a substantially horizontal axis (30; 230) between an upright position in which the handle (18; 218) runs in a substantially vertical direction and a forward position in which the handle (18; 218) runs in a forward direction (32) or in an inclined forward and upward direction.

14. Trolley (10) according to claim 13,
further comprising handle locking means (34) adapted to lock the pivoting movement of the handle (18; 218) about the substantially horizontal axis (30; 230) at least in the upright position.

15. Trolley (10) according to any of the preceding claims,
wherein the handle (218) comprises
- a telescopic arrangement to adjust the length of the handle (218), wherein the telescopic arrangement comprises a tube portion (248) and a base portion (255), wherein the tube portion (248) is slidably received within base portion (255),
- a latch-and-lock mechanism (261) to control the sliding movement between tube portion (248) and base portion (255) such as to assume separate indexing positions, and
- a latch locking member (265) to be operated manually by a user to lock or allow movement of the tube portion (248) relative to the base portion (255).
